(19) Europäisches Patentamt
European Patent Office
Office européen des brevets

(11) Numéro de publication: **0 189 436**
**B1**

(12) # FASCICULE DE BREVET EUROPÉEN

(45) Date de publication du fascicule du brevet: **12.10.88**

(51) Int. Cl.⁴: **C 09 K 3/18**, C 23 G 5/028, C 03 C 23/00

(21) Numéro de dépôt: **85903008.2**

(22) Date de dépôt: **24.06.85**

(86) Numéro de dépôt international: **PCT/FR 85/00165**

(87) Numéro de publication internationale: **WO 86/00329 (16.01.86 Gazette 86/02)**

(54) **COMPOSITION DE DEMOUILLAGE A BASE DE FLUOROCHLOROHYDROCARBURE DE TENTIO-ACTIF ET D'ACIDE CARBOXYLIQUE.**

(30) Priorité: **29.06.84 FR 8410345**

(43) Date de publication de la demande: **06.08.86 Bulletin 86/32**

(45) Mention de la délivrance du brevet: **12.10.88 Bulletin 88/41**

(84) Etats contractants désignés: **AT BE CH DE FR GB IT LI LU NL SE**

(56) Documents cité:
**EP-A-0 090 677**
**FR-A-2 353 625**
**FR-A-2 527 625**

(73) Titulaire: **ATOCHEM, 4 & 8, Cours Michelet La Défense 10, F-92800 Puteaux (FR)**

(72) Inventeur: **REMOND, Jean- Pierre, 6, rue Alexandre Fleming, F-91300 Massy- Villaine (FR)**

(74) Mandataire: **Rochet, Michel, ATOCHEM Département Propriété Industrielle, F-92091 Paris la Défense Cédex 42 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 189 436 B1

LIBER, STOCKHOLM 1988

**Description**

La présente invention concerne une composition utilisable notamment pour l'élimination de l'eau se trouvant à la surface des surfaces mouillées.

Des compositions de démouillage de divers types ont été décrites dans la littérature. De telles compositions comprennent généralement un fluorochlorohydrocarbures, et plus précisément le trichloro-1,1,2, trifluoro-1,2,2-éthane et un ou plusieurs tensioactifs, pouvant être choisis par exemple parmi des alkyles phosphates neutralisés au moyen d'amine (brevet frinçais 1 515 393), des sels d'amine (brevet français 2 040 733), des diamides (brevet français 2 205 562) - le cas échéant en présence d'acide carboxylique (brevet français 2 353 625) - ou des tensio-actifs cationiques dérivés de l'imidazoline (brevet français 2 217 045), ou encore des tensio-actifs résultant de la réaction de chlorhydrate d'ammonium quaternaire avec un acide alkyphosphorique en présence d'une amine fluorée (brevet européen 83 400293 3 EP-A-90 677).

La présente invention concerne un perfectionnement aux compositions décrites dans ledit brevet européen, perfectionnement se situant au niveau de la vitesse de séparation de la phase aqueuse de la phase organique dans le processus d'élimination de l'eau.

Plus précisément l'invention concerne une composition de démouillage, utilisable pour le déplacement d'eau liquide, ladite composition compremant un solvant constitué pour au moins 50 % en poids par un chlorofluorohydrocarbure et un agent tensio-actif résultant de la réaction d'un chlorhydrate d'ammonium quaternaire de formule: $(R)_2{}^{(+)}N\ (R')_2Cl^{(-)}$ (I) avec un acide alkylphosphorique de formule: $(R''O)_p\ (HO)_{2-p}\ PO_2H$ (II) en présence d'une amine fluorée de formule $R^F\ XNR_1\ R_2$ (III), formules dans lesquelles $R_F$ représente une chaîne perfluorée $C_qF_{2q+1}$, linéaire ou ramifiée dans laquelle q est un nombre entier comprie entre 2 et 20, X est un groupe de liaison bivalent, éventuellement partiellement halogéné, R est un groupe alkyle ayant de 6 à 18 atomes de carbone, R' est un groupe alkyle ayant de 1 à 2 atomes de carbone, $R_1$ et $R_2$, identiques ou différente représentent un atome d'hydrogène, un radical alkyle ou un radical hydroxyalkyle ayant de 1 à 8 acomes de carbone et R'' est un groupe alkyle ayant de 1 à 18 atomes de carbone, ladite composition étant caractérisée en ce qu'elle comprend au moins un acide carboxylique choisi parmi les mono ou diacides aliphatiques saturés ayant de 5 à 10 atomes de carbone, linéaires, ramifiés ou cycloques, et éventuellement suvstitués; les mono ou diacides aliphatiques insaturés ayant de 5 à 30 atomes de carbone, linéaires ou ramifiés et éventuellement substitués; les acides aromatiques ayant de 7 à 9 atomes de carbone éventuellement mono ou polysubstitués par des groupes amino, nitro, hydroxy ou méthoxy.

Les compositions conformes à l'invention comprennent avantageusement, en poids:

- de 90 à 99,98 % de solvant
- de 0,01 à 8 % d'agent tensio-actif
- de 0,01 à 2 % d'acide carboxylique,

le total des quantités des trois constituants étant de 100 %.

Dans ces compositions, le chlorofluorohydrocarbure est avantageusement le trichloro-1,1,2 triflouoro-1,2,2 éthane et le solvant complémentaire peut etre choisi dans le groupe constitué par des hydrocarbures aliphatiques cels que l'hexane, des coupes aliphatiques telles que le white spirit, le kérosène, des hydrocarbures méthylène, les dichloréthanes, les trichloréthanes, le tétrachloro-1,1,2,2-éthane, le tétrachloro-1,1,2,2-difluoro-1,2-éthane, le perchloréthylène, le trichloréthylène, les hydrocarbures aromatiques tels que le xylène.

On peut utiliser les différents agents tensio-actifs décrits dans le brevet européen 83 400293.3. On choisira de préférence les produits résultant de la réaction d'un chlorhydrate d'ammonium quaternaire de formule I dans laquelle R' représente un groupe méthyle et R représente un groupe alkyle ayant de 12 à 18 atomes de carbone, avec un mélange d'acides mono- et di- alkylphosphoriques de formule II, dans laquelle le symbole R'' représente un radical alkyle ayant de 4 à 14 atomes de carbone, cette réaction étant effectuée en présence d'une amine fluorée de formule (III) dans laquelle le symbole q est compris entre 4 et 10, $R_1$ et $R_2$ représentent un atome d'hydrogène, un radical méthyle, éthyle, hydroxyéthyle, et X représente un radical bivalent saturé ou insaturé purement hydrocarboné ou substitué partiellement par un atome de fluor, ou un enchaînement comprenant un ou plusieure des radicaux bivalents précédents et un groupement choisi parmi $-SO_2-$, -CONH-, -NH-.

La préparation de l'agent tensio-actif, de préférence dans le milieu solvant de la composition selon l'invention, est décrite dans le brevet européen 83 400293.3, dont le contenu est incorporé ici par référence.

A titre d'exemples d'acides pouvant entrer dans les compositions objet de l'invention, on peut citer: les acides valérique, caproïque, énanthique, caprylique, pimélique, subérique, azélaïque, sébacique; les acides oléïque, linoléïque, undécylénique, ricinoléïque; les acides cyclohexane monocarboxylique ou cyclohexanedicarboxylique - 1,2 ou - 1,4 trans; les acides benzoïque, ortho ou para hydroxybenzoïque, amino-2 benzoïque, nitro-3 salicylique, nitro-5 salicylique, orthotoluïque, cinnamique.

La composition de démouillage conforme à l'invention peut être préparée par simple mélange de ses constituants. Elle peut aussi être réalisée par addition de l'acide carboxylique à une composition contenant le solvant et l'agent tensio-actif, préparé séparément ou en présence de tout ou partie du solvant. Dans le cas où l'agent tensio-actif est préparé directement dans le solvant, la composition peut contenir tout ou partie du chlorhydrate d'amine fluorée formé, ce produit pouvant être éliminé de différentes manières, par exemple par

dissolution dans l'eau au cours du procédé de séchage ou par filtration, avantageusement effectuée à partir d'une composition concentrée. Le choix de la technique d'extraction de ce chlorhydrate est lié à la solubilité ou à l'insolubilité de ce produit dans le milieu et il appartient à l'homme du métier de retenir la technique la plus avantageuse.

Les compositions conformes à l'invention permettent d'effectuer un séchage très efficace et plus précisément d'éliminer l'eau de la surface d'objets de natures diverses. Elle convient en partieulier pour le démouillage d'objets métalliques, de pièces en verre ou en matériaux réfractaires, de pierres précieuses ou d'articles en matières plastiques. Au moyen de ces compositions on observe une élimination ou déplacement rapides de l'eau et une nette augmentation de la vitesse de séparation des phases aqueuse et organique formées lors de l'élimination de l'eau, ce qui représente un avantage lors de la mise en oeuvre de ces compositions dans des installations prévues à cet effet. Ainsi, l'eau, rapidement séparée de la composition de séchage pourra être évacuée vers l'égout par un dispositif approprié (décanteur).

Les exemples suivant illustrent l'invention.

Dans ces exemples les abréviations ont les significations suivantes:

- Chlorure N(+) : chlorure de dimethyldilaurylammonium

$(C_{12}H_{25})_2 N^{(+)} (CH_3)_2 Cl^{(-)}$

Le produit utilisé est un produit commercial, à 75 % de matière active dans l'isopropanol, contenant 0,161 équivalent chlorure pour 100 g. Ce produit est un mélange d'homologues selon la répartition suivante: (en poids)

| | | | | |
|---|---|---|---|---|
| $C_8$ | 3 % | $C_{16}$ | | 10 % |
| $C_{10}$ | 6 % | $C_{18}$ | saturé | 2 % |
| $C_{12}$ | 56 % | $C_{18}$ | insaturé | 5 % |
| $C_{14}$ | 18 % | | | |

- F 113 : trichloro -1,1,2 trifluoro - 1,2,2 éthane.

**Préparation et formulation**

On prépare le mélange, à température ambiante:

| | |
|---|---|
| . Chlorure N(+) | : 8,32 g (0,88 mole) |
| . Acide butylphosphorique | : 2,69 g (1 mole) |
| . Amine $C_6F_{13}SO_2NH\ C_3H_6\ N\ (CH_3)_2$ | : 7,82 g (1 mole) |
| . F 113 | : 150 g |

La solution initiale se trouble assez rapidement et, après 24 heures de repos on recueille après filtration 4,2 g d'un solide cristallisé blanc, identifié comme étant le chlorhydrate de l'amine fluorée.

Le filtrat, parfaitement limpide, est dilué par du F 113 (concentration 0,04 % en poids).

Cette formulation, donnée à titre de témoin, est identifiée formulation 1.

La formulation 2 contient, en poids, 99,86 % de F 113, 0,04 % de filtrat de la formulation 1 et 0,1 % d'acide caprylique.

La formulation 3 conticnt, en poids, 99,86 % de F 113, 0,04 % du filtrat de la formulation 1 et 0,1 % d'acide benzoïque.

**Exemple 1:** Test d'émulsionnement

1.1. Dans un flacon, on place 50 g de la formulation à tester et 18 g d'eau distillée. Le flacon est agité vigoureusement pendant 30 s. On laisse reposer ensuite l'émulsion formée et on mesure le temps, l'épaisseur de l'interface entre la phase inférieure organique et la phase supérieure aqueuse. On observe:

Epaisseur en mm de l'interface

| Durée en minutes | Formulation n°1 | Formulation n°2 | Formulation n°3 |
|---|---|---|---|
| 5 | 20 | 3 | 1 |
| 10 | 5 | 0 | 0 |
| 60 | 0 | 0 | 0 |

Les flacons contenant les formulations ci-dessus sont de nouveaux agités pendant 30 secondes.

Epaisseur en mm de l'interface

| Durée mn | Durée heures | Formulation n°1 | Formulation n°2 | Formulation n°3 |
|---|---|---|---|---|
| 10 | | 30 | 13 | 10 |
| 20 | | 30 | 11 | 6 |
| 60 | | 30 | 4 | 1 |
| | 2 | 28 | 2 | 0 |
| | 48 | 25 | 1 | 0 |

1.2. (Témoin). Dans un bac de dimensions approximatives 200 x 150 x 150 mm, on fait circuler en recyclage permanent à l'aide d'une pompe et à un débit de 300 l/h environ, un mélange constitué de 7 l de la formulation n°1 et 0,800 l d'eau distillée.

On constate au bout de 5 mm que le mélange a une apparence homogène. Un échantillon prélevé en bout de ce temps présente après 3 mm 2 phases: une phase organique inférieure légérement trouble et une phase supérieure visqueuse qui est en fait une émulsion de la phase organique et de la phase aqueuse. On ne constate pas l'apparition d'une phase aqueuse limpide après 48 heures.

. (Invention). L'opération décrite ci-avant est réalisée en utilisant la formulation n°3. Un échantillon est prélevé aprés avoir fait circuler le mélange à un débit de 300 l/h environ pendant 5 minutes. L'échantillon présente au bout de 2 minutes une phase organique et une phase aqueuse nettement séparée sans trace d'émulsion.

**Exemple 2:** Tests de séchage

Séchage de matrices de disques 45 tours en nickel.

Une matrice 45 tours est préalablement dégraissée dans une solution détergente alcaline en présence d'ultra-sons puis rincée dans de l'eau de ville courante. Elle est ensuite immergée dans l'une des formulations 1,2 ou 3 portée à ébullition pendant 3 minutes, puis rincée dans du F113 pur.

On constate que sur 5 essais on obtient un séchage à 100 % de cette matrice avec chacune des formulations utilisées: les compositions conformes à l'invention associent donc une grande efficatité de séchage à la vitesse de séparation de phases améliorée.

**Revendications**

1. Composition de démouillage pour le déplacement d'eau liquide, ladite composition comprenant un solvant constitué pour au moins 50 % en poids par un chlorofluorohydrocarbure et un agent tensio-actif résultant de la réaction d'un chlorhydrate d'ammonium quaternaire de formule: $(R)_2{}^{(+)}N\ (R')_2Cl^{(-)}$ (I) avec un acide alkylphosphorique de formule: $(R''0)_p\ (HO)_{2-p}\ PO_2H$ (II) en présence d'une amine fluorée de formule $R_F\ XNR_1R_2$ (III), formules dans lesquelles $R_F$ représente une chaîne perfluorée $C_qF_{2q+1}$ linéaire ou ramifiée dans laquelle q est un nombre entier compris entre 2 et 20, X est un groupe de liaison bivalent, éventuellement partiellement halogéné, R est un groupe alkyle ayant de 6 à 18 atomes de carbonc, R' est un groupe alkyle ayant de 1 à 2 atomes de carbone, $R_1$ et $R_2$, identiques ou différents représentent un atome d'hydrogène, un radical alkyle ou un radical hydroxyalkyle ayant de 1 à 8 atomes de carbone et R" est un groupe alkyle ayant de 1 à 18 atomes de carbone, ladite composition étant caractérisée en ce qu'elle comprend au moins un acide carboxylique choisi parmi les mono ou diacides aliphatiques saturés ayant de 5 à 10 atomes de carbone, linéaires, ramifiés ou cycliques, et éventuellement substitués; les mono ou diacides aliphatiques insaturés ayant de 5 à 30 atomes de carbone, linéaires ou ramifiés et éventuellement substitués; les acides aromatiques ayant de 7 à 9 atomes de carbone éventuellement mono ou polysubstitués par des groupes amino, nitro, hydroxy ou méthoxy.

2. Composition selon la revendication 1, caractérisée en ce qu'elle comprend (en poids):

- de 90 à 99,98 % de solvant
- de 0,01 à 8 % d'agent tensio-actif

- de 0,01 à 2 % d'acide carboxylique

le total des quantités des trois constituants étant de 100 %.

3. Composition selon l'une quelconque des revendications 1 ou 2, caractérisée en ce que le chlorofluorhydrocarbure est le trichloro-1,1,2 trifluoro-1,2,2 éthane.

4. Composition selon la revendication 1, caractérisée en ce que le tensio-actif résulte de la réaction d'un chlorhydrate d'ammonium quaternaire de formule I dans laquelle R' représente un groupe méthyle et R représente un groupe alkyle ayant de 12 à 18 atomes de carbone, avec un mélange d'acides mono- et di-alkyphosphoriques de formule II, dans laquelle le symbole R'' représente un radical alkyle ayant de 4 à 14 atomes de carbone, cette réaction étant effectuée en présence d'une amine fluorée de formule (III) dans laquelle le symbole q est compris entre 4 et 10, $R_1$ et $R_2$ représentant un atome d'hydrogène, un radical méthyle, éthyle, hydroxyéthyle, et X représente un radical bivalent saturé ou insaturé purement hydrocarboné ou substitué partiellement par un atome de fluor, ou un enchaînement comprenant un ou plusieurs des radicaux bivalents précédents et un groupement choisi parmi $-SO_2-$,-CONH-, -NH-.

5. Application des compositions selon l'une quelconque des revendications 1 à 4 au démouillage d'objets divers et notamment d'objets métalliques, de pièces en verre ou en matériaux refractaires, de pierres précieuses et d'articles en matières plastiques.

**Patentansprüche**

1. Entfeuchtungsgemisch zum Versetzen flüssigen Wassers, bestehend aus einem mindestens 50 Gewichtsprozent eines Fluorchlorkohlenstoffes enthaltenden Lösungsmittel und einem Tensid, das bei der Reaktion eines quartären Ammoniumchlorids der Formel

$$(R)_2{}^{(+)}N(R')_2Cl^{(-)} \qquad (I)$$

mit einer Alkylphosphorsäure der Formel

$$(R''O)_p\,(HO)_{2-p}PO_2H \qquad (II)$$

in Anwesenheit eines fluorierten Amins der Formel

$$R_fXNR_1R_2 \qquad (III)$$

in welchen Formeln $R_f$ eine perfluorierte verzweigte oder unverzweigte Kette $C_qF_{2q+1}$ bedeutet, in der q eine ganze Zahl zwischen 2 und 20 ist, X eine zweiwertige, eventuell teilweise halogenierte Brückengruppe ist, R eine Alkylgruppe mit 6 bis 18 Kohlenstoffatomen, R' eine Alkylgruppe mit 1 bis 2 Kohlenstoffatomen, $R_1$ und $R_2$ gleich oder verschieden sind und ein Wasserstoffatom oder ein Alkyl- oder Hydroxyalkylradikal mit 1 bis 8 Kohlenstoffatomen bedeuten und R'' eine Alkylgruppe mit 1 bis 18 Kohlenstoffatomen, wobei das genannte Gemisch dadurch gekennzeichnet ist, daß es mindestens eine Carbonsäure aus der Gruppe der verzweigten, unverzweigten oder ringförmigen und gegebenenfalls substituierten, gesättigten, aliphatischen Mono- oder Dicarbonsäuren mit 5 bis 10 Kohlenstoffatomen, der verzweigten oder unverzweigten und gegebenenfalls substituierten, ungesättigten, aliphatischen Mono- oder Dicarbonsäuren mit 5 bis 30 Kohlenstoffatomen, und der eventuell ein- oder mehrfach durch Amino-, Nitro-, Hydroxy- oder Methoxygruppen substituierten, aromatischen Säuren mit 7 bis 9 Kohlenstoffatomen enthält.

2. Gemisch nach Patentanspruch 1, dadurch gekennzeichnet, daß es enthält (in Gewichtsprozent):

- 90 bis 99,98 % Lösungsmittel
- 0,01 bis 8 % Tensid
- 0,01 bis 2 % Carbonsäure

wobei die Summe der Mengen der drei Bestandteile 100 % beträgt.

3. Gemisch nach irgendeinem der Patentansprüche 1 oder 2, dadurch gekennzeichnet, daß der Fluorchlorkohlenstoff 1,1,2-Trichlor-1,2,2-trifluorethan ist.

4. Gemisch nach Patentanspruch 1, dadurch gekennzeichnet, daß das Tensid aus der Reaktion eines quartären Ammoniumchlorids der Formel (I), in der R' eine Methylgruppe und R eine Alkylgruppe mit 12 bis 18 Kohlenstoffatomen bedeuten, mit einer Mischung von Mono- und Dialkylphosphorsäuren der Formel (II), in der R'' für ein Alkylradikal mit 4 bis 14 Kohlenstoffatomen steht, hervorgeht, wobei diese Reaktion in Anwesenheit eines fluorierten Amins der Formel (III) durchgeführt wird, in der q zwischen 4 und 10 liegt, $R_1$ und $R_2$ ein Wasserstoffatom, ein Methyl-, Ethyl- oder Hydroxyethylradikal bedeuten und X ein gesättigtes oder ungesättigtes, zweiwertiges, entweder nur Kohlen- und Wasserstoff enthaltendes oder durch ein Fluoratom substituiertes Radikal ist oder ein aus einem oder mehreren der oben genannten zweiwertigen Radikale und einer $-SO_2-$, -CONH-, -NH-Gruppe bestehendes Kettenglied.

5. Anwendung der Gemisch nach irgendeinem der Patentanspruche 1 bis 4 zum Trocknen verschiedenartiger Gegenstände und insbesondere von Gegenständen aus Metall, Glas oder feuerfesten Materialien, Edelsteinen und Kunststoffartikeln.

**Claims**

1. Water-removing composition for displacing liquid water, the said composition containing a solvent consisting of at least 50 % by weight of a chlorofluorohydrocarbon and a surfactant resulting from the reaction of a quaternary ammonium chloride of formula: $(R)_2{}^{(+)}N(R')_2Cl^{(-)}$ (I) with an alkylphosphoric acid of formula: $(R''O)_p(HO)_{2-p}PO_2H$ (II) in the presence of a fluorinated amine of formula: $R_F XNR_1 R_2$ (III), in which formulae $R_F$ denotes a linear or branched perfluorinated chain $C_qF_{2q+1}$, in which q is an integer between 2 and 20, X is a bivalently bonded group, optionally partially halogenated, R is an alkyl group having 6 to 18 carbon atoms, R' is an alkyl group having 1 to 2 carbon atoms, $R_1$ and $R_2$, which may be identical or different, denote a hydrogen atom, an alkyl radical or a hydroxyalkyl radical having from 1 to 8 carbon atoms, and R'' is an alkyl group having from 1 to 18 carbon atoms, the said composition being characterized in that it contains at least one carboxylic acid chosen from saturated linear, branched or cyclic aliphatic mono- or diacids having from 5 to 10 carbon atoms, and optionally substituted; unsaturated linear or branched aliphatic mono- or diacids having from 5 to 30 carbon atoms and optionally substituted; and aromatic acids having from 7 to 9 carbon atoms, optionally mono- or polysubstituted with amino, nitro, hydroxy or methoxy groups.

2. Composition according to Claim 1, characterized in that it contains (by weight):

- from 90 to 99.98 % of solvent
- from 0.01 to 8 % of surfactant
- from 0.01 to 2 % of carboxylic acid,

the total of the amounts of the three constituents being 100 %.

3. Composition according to any one of Claims 1 or 2, characterized in that the chlorofluorohydrocarbon is 1,1,2-trichloro-1,2,2-trifluoroethane.

4. Composition according to Claim 1, characterized in that the surfactant results from the reaction of a quaternary ammonium chloride of formula (I) in which R' denotes a methyl group and R denotes an alkyl group having from 12 to 18 carbon atoms, with a mixture of mono- and dialkylphosphoric acids of formula (II), in which the symbol R'' denotes an alkyl radical having from 4 to 14 carbon atoms, this reaction being performed in the presence of a fluorinated amine of formula (III), in which the symbol q is between 4 and 10, $R_1$ and $R_2$ denoting a hydrogen atom or a methyl, ethyl or hydroxy ethyl radical, and X denotes a saturated or unsaturated bivalent radical which is purely hydrocarbon or is partially substituted with a fluorine atom, or a link consisting of one or more of the above bivalent radicals and a group chosen from $-SO_2-$, -CONH- and -NH-.

5. Application of the compositions according to any one of Claims 1 to 4 to the removal of water from various articles, and in particular metal articles, objects made of glass or refractory materials, precious stones or plastic objects.